# EUROPÄISCHE PATENTSCHRIFT

(11) **EP 1 375 303 B1**
(45) Veröffentlichungstag und Bekanntmachung des Hinweises auf die Patenterteilung: **12.07.2006**
(21) Anmeldenummer: 03012385.5
(22) Anmeldetag: 30.05.2003
(51) Int. Cl.: B62D 5/09, B62D 5/087, B62D 5/04

(54) **Hydrolenkung für Kraftfahrzeuge**
Hydraulic steering for motor vehicles
Direction hydraulique pour véhicules automobiles

(30) Priorität: 19.06.2002 DE 10227236
(43) Veröffentlichungstag der Anmeldung: 02.01.2004
(73) Patentinhaber: ZF Lenksysteme GmbH, 73527 Schwäbisch Gmünd (DE)
(72) Erfinder: Budaker, Martin, 73540 Heubach (DE); Breu, Günther, 73574 Iggingen (DE); Richter, Peter, 71404 Korb (DE); Neufeld, Albert, 73529 Schwäbisch Gmünd (DE); Hägele, Michael, 73432 Aalen (DE)

(56) Entgegenhaltungen:
- EP-A- 0 028 556
- DE-A- 3 514 325
- DE-A- 10 038 167

## Beschreibung

Die Erfindung betrifft eine Hydrolenkung für Kraftfahrzeuge mit einer Lenkhandhabe, die ohne Zwangskopplung mit zu lenkenden Fahrzeugrädern betätigbar ist, wobei ein Winkelsensor die Lenkbewegung erfaßt und an ein Steuergerät übermittelt, welches einen Elektromotor ansteuert, der ein Moment auf eine Antriebswelle eines Lenkgetriebes zur Auslenkung der Fahrzeugräder ausübt, und wobei der Elektromotor zur hydraulischen Unterstützung ein Steuerventil einer Hydraulikeinheit ansteuert.

Eine gattungsgemäße Servolenkung für Kraftfahrzeuge ist aus der DE 195 41 749 C1 und der DE 100 38 167 bekannt.

Bei aus der Praxis bekannten hydraulisch unterstützten Lenkungen ohne elektronische Regelung, d.h. ohne Elektromotor, wird das Lenkmoment, das der Fahrer über die Lenkhandhabe erzeugt, mittels einer massiven Gelenkwelle auf die Lenkspindel übertragen. Die Lenkspindel wiederum überträgt das Lenkmoment auf ein Steuerventil, das proportional zum Moment ausgelenkt wird. Das Steuerventil leitet den Hydraulikstrom abhängig von der Lenkrichtung in einen der beiden Arbeitsräume. Durch den Arbeitszylinder wird die Drehbewegung der Lenkspindel unterstützt. Es besteht somit eine feste mechanische Verbindung zwischen Lenkrad und Ventil.

Bei den aus der Praxis bekannten elektronisch geregelten und hydraulisch unterstützten Lenkungen entfällt die mechanische Verbindung zwischen Lenkrad und Lenkspindel. Somit kann kein Moment vom Fahrer direkt auf das Steuerventil übertragen werden. Die vom Fahrer eingeleitete Lenkbewegung (Soll-Position) wird über Winkelsensoren erfaßt und auf elektrischem Wege an ein Steuergerät weitergeleitet. Das Steuergerät leitet entsprechend der empfangenen Soll-Position den Lenkvorgang mittels des Radaktuators ein. Dabei erzeugt ein Elektromotor über ein Getriebe ein Moment. Proportional zum Moment des Elektromotors wird das Steuerventil angesteuert, das die hydraulische Unterstützung des Lenkvorganges gewährleistet.

Aus einem in der gattungsgemäßen Schrift beschriebenen Ausführungsbeispiel ist eine Servolenkung bekannt, bei der mittels einer vom Fahrer des jeweiligen Fahrzeugs betätigten Lenkhandhabe ein Sollwertgeber betätigt wird. Dessen Signale geben jeweils einen Sollwert für den einzustellenden Lenkwinkel der Fahrzeugräder vor und werden einem Eingang einer Regelschaltung zugeführt. Die Regelschaltung vergleicht den Sollwert mit einem jeweiligen Istwert, welcher mittels eines Istwertgebers erfaßt wird, der mit einem mit den Fahrzeugrädern zwangsgekoppelten Lenkgetriebeteil zusammenwirkt, beispielsweise mit einem Ritzel und/oder der Zahnstange. Entsprechend dem Ergebnis des Soll-Ist-Vergleiches steuert die Regelschaltung einen Elektromotor an, so daß sich dieser in der einen oder anderen Richtung dreht, je nach der einzustellenden Lenkwinkeländerung. Entsprechend dem zwischen dem Elektromotor und dem Ritzel wirkenden Drehmoment wird ein Drehschieberteil und eine Drehschieberbuchse gegen die Kraft eines Drehstabes mehr oder weniger weit relativ zueinander verdreht, so daß zwischen zwei Motoranschlüssen eine mehr oder weniger große Druckdifferenz erzeugt wird und der Servomotor die jeweilige Stellbewegung des Elektromotors mit mehr oder weniger großer Kraft unterstützt.

Von Nachteil bei den aus der Praxis bekannten elektronisch geregelten und hydraulisch unterstützten Lenkungen, sowie bei der aus der gattungsgemäßen Schrift bekannten Lenkung ist, daß eine vorteilhafte Ansteuerung des Steuerventiles aufgrund der rein rotatorischen Bewegung des Elektromotores nicht möglich ist. Eine vorteilhafte Auslenkung eines Steuerventiles erfolgt translatorisch. D.h. das Steuerventil darf ausschließlich axial und ohne Drehbewegung bewegt werden. Problematisch ist dabei, die rotatorische Bewegung des Elektromotors in eine rein translatorische Bewegung umzuwandeln. Erschwerend kommt hinzu, daß die Auslenkung des Steuerventils vom Drehmoment des Elektromotors abhängig sein soll, d.h. bei einem höheren Lenkmoment des Fahrers muß eine größere Auslenkung des Steuerventiles und damit eine verstärkte hydraulische Unterstützung des Lenkvorganges erfolgen.

Eine vorteilhafte Ansteuerung des Steuerventils, so daß die Ansteuerung in den Kraftfluß zwischen dem Elektromotor und dem Getriebe bzw. den Fahrzeugrädern integriert ist, ist mit den bekannten Servolenkungen nicht möglich.

Der vorliegenden Erfindung liegt daher die Aufgabe zugrunde, eine einfache und kostengünstige Hydrolenkung der eingangs erwähnten Art für Kraftfahrzeuge zu schaffen, bei der die Ansteuerung des Ventils in den Kraftfluß des vom Elektromotor erzeugten Momentes integriert ist, wobei die Auslenkung des Steuerventils translatorisch erfolgen und vom Moment des Elektromotors abhängig sein soll.

Erfindungsgemäß wird diese Aufgabe durch die kennzeichnenden Merkmale des Anspruchs 1 gelöst.

Dadurch, daß das Antriebszahnrad relativ und definiert zu dem Abtriebszahnrad verdrehbar ist, ergibt sich im Hinblick auf die sich mit dem Abtriebszahnrad drehende Schrägführung und die sich mit der Antriebswelle drehende Längsführung eine definierte Verschiebung. Die Längsführung ist dabei als Führung zu versehen, die sich in Axialrichtung der Antriebswelle erstreckt. Analog dazu ist die Schrägführung als Führung zu verstehen, die einen (definierten) Steigungswinkel hierzu aufweist. Durch die definierte Steigung der Schrägführung und die axiale Ausrichtung der Längsführung wird bei einer relativen Verdrehung der beiden Zahnräder zueinander das Ansteuerglied, das von beiden Führungen geführt ist, in Axialrichtung der Antriebswelle verschoben. Das Ansteuerglied wird dabei in Abhängigkeit von der Drehrichtung der beiden Zahnräder verschoben. Die translatorische Bewegung des Ansteuergliedes wird in einfacher Weise zum translatorischen Auslenken des Steuerventiles verwendet.

Die Auslenkung des Ansteuergliedes und somit auch die Auslenkung des Steuerventiles hängt in vorteilhafter Weise vom Moment des Elektromotors ab. Bei einem höheren Moment erfolgt eine größere Auslenkung des Ansteuergliedes aufgrund der Führung durch die Schrägführung und die Längsführung, die aufgrund der jeweiligen Abhängigkeit von dem Abtriebszahnrad bzw. der Antriebswelle entsprechend stärker beeinflußt werden.

Vorteilhafte Ausgestaltungen und Weiterbildungen der Erfindung ergeben sich aus den Unteransprüchen und aus den nachfolgend anhand der Zeichnung dargestellten Ausführungsbeispielen.

Es zeigt:
- Fig. 1: eine schematische Darstellung einer "steer by wire" Hydrolenkung;
- Fig. 2: eine Schnittdarstellung der wesentlichen Teile der erfindungsgemäßen Lösung;
- Fig. 3: einen Querschnitt gemäß der Linie III-III der Fig. 2;
- Fig. 4: eine Variation der in Fig. 2 dargestellten erfindungsgemäßen Lösung, wobei die Antriebswelle einen Hohlraum zur Führung eines Drehstabes aufweist;
- Fig. 5: eine räumliche Darstellung der in Fig. 2 dargestellten erfindungsgemäßen Lösung in einer Ausgestaltung mit der in Fig. 3 dargestellten Zentrier- und Rückführeinrichtung;
- Fig. 6: eine schematische Darstellung der wesentlichen Teile der erfindungsgemäßen Lösung in einer alternativen Ausführungsform; und
- Fig. 7: eine schematische Darstellung der wesentlichen Teile der erfindungsgemäßen Lösung in einer weiteren alternativen Ausführungsform.

Hydrolenkungen für Kraftfahrzeuge mit einer Lenkhandhabe 1, die ohne Zwangskopplung mit zu lenkenden Fahrzeugrädern 2 betätigbar ist, sind bereits hinlänglich bekannt, weshalb nur beispielsweise auf die DE 195 41 749 C1 hingewiesen wird. Nachfolgend wird deshalb nur auf die für die Erfindung wesentlichen Merkmale näher eingegangen.

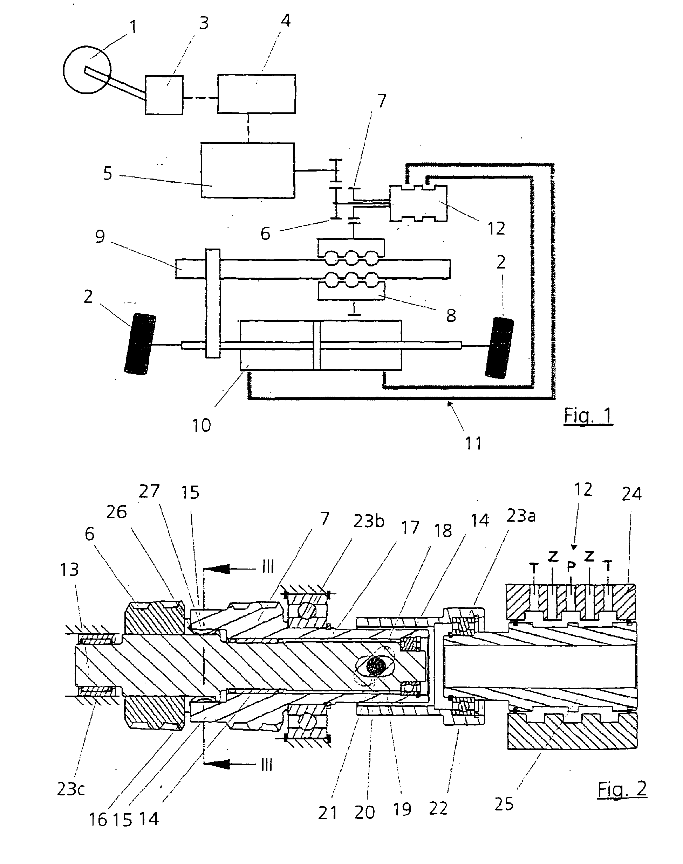

Fig. 1 zeigt zur Verdeutlichung eine schematische Darstellung des Gesamtkonzeptes. Eine vom Fahrer durch die Lenkhandhabe 1 eingeleitete Lenkradbewegung wird von einem Winkelsensor 3 erfaßt und auf elektrischem Wege an ein Steuergerät 4 weitergeleitet. Das Steuergerät 4 nimmt dabei einen Soll-Ist-Vergleich vor (auf den, da dieser hinlänglich bekannt ist, hierbei nicht näher eingegangen werden soll) und steuert einen Elektromotor 5 an. Der Elektromotor 5 greift in das Antriebszahnrad 6 ein. Dabei ist ein Abtriebszahnrad 7 vorgesehen, das mit einer Mechanik gekoppelt ist, die das Moment des Elektromotors 5 auf die Fahrzeugräder 2 überträgt und letztere eine Lenkbewegung ausführen läßt. Die dem Abtriebszahnrad 7 (das in den folgenden Figuren näher beschrieben ist) nachfolgende Mechanik besteht aus einer Kugelumlaufmutter 8, einer Kugelspindel 9 sowie einem angekoppelten Hydraulikzylinder 10, der einen Teil einer Hydraulikeinheit 11 darstellt.

Die Funktion einer Hydraulikeinheit 11 ist prinzipiell bekannt, weshalb nachfolgend darauf nicht näher eingegangen wird.

Durch den Antrieb der Kugelumlaufmutter 8 führt die Kugelspindel 9 eine translatorische Bewegung aus. Diese Bewegung wird von der Hydraulikeinheit 11 bzw. dem Hydraulikzylinder 10 unterstützt.

Die Steuereinheit eines Steuerventils 12 befindet sich im direkten Kraftfluß zwischen dem Elektromotor 5 und den Fahrzeugrädern 2. Übt der Elektromotor 5 ein Moment auf das Antriebszahnrad 6 aus, wirken die Fahrzeugräder 2 über das Abtriebszahnrad 7 diesem Moment entgegen. Dies führt, wie bezüglich der nachfolgenden Figuren näher beschrieben wird, zu einer Auslenkung des Steuerventiles 12.

Fig. 2 zeigt eine Antriebswelle 13, die mit dem Antriebszahnrad 6 und dem Abtriebszahnrad 7 versehen ist. Dabei ist das Antriebszahnrad 6 starr mit der Antriebswelle 13 verbunden und das Abtriebszahnrad 7 davon entkoppelt. Das Abtriebszahnrad 7 dient hierbei zur Übertragung des Moments des Elektromotors 5 auf die Fahrzeugräder 2. In dem in Fig. 2 dargestellten Ausführungsbeispiel erfolgt die Entkopplung des Abtriebszahnrades 7 von der Antriebswelle 13 durch zwei Lager 14.

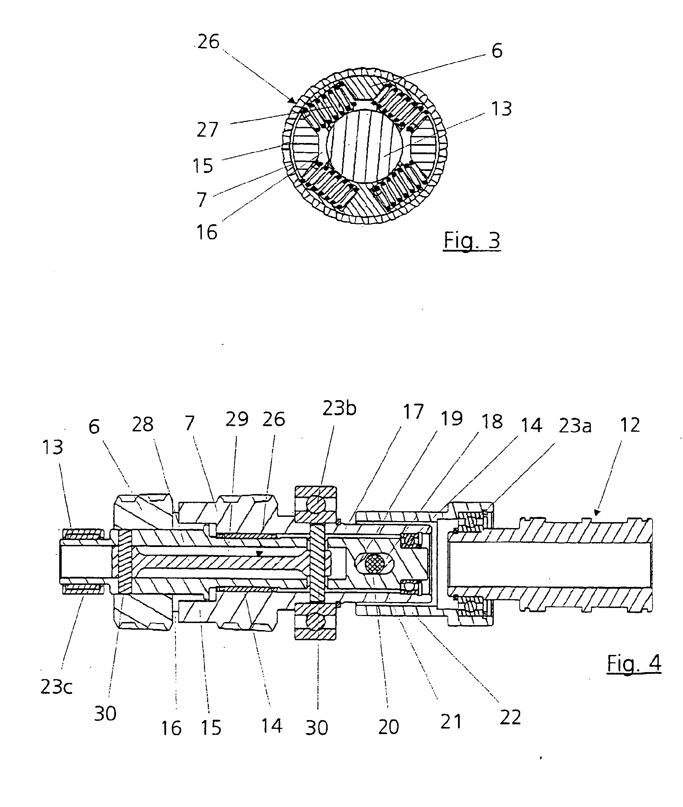

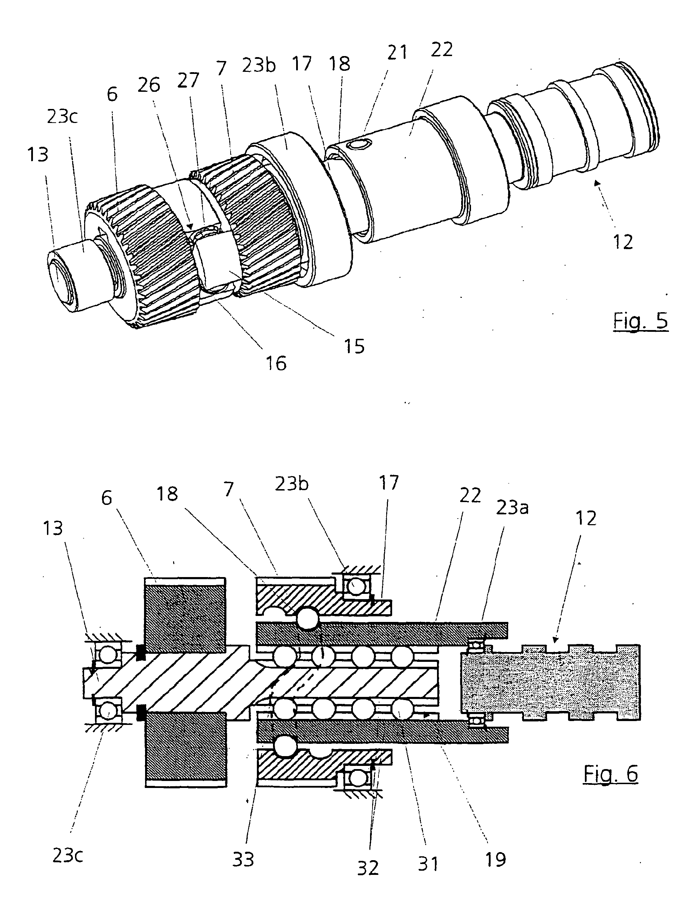

Die Zahnräder 6, 7 sind dabei derart ausgebildet, daß ein relatives Verdrehen der beiden Zahnräder 6, 7 zueinander in einem definierten Bereich möglich ist. In dem in Fig. 2 dargestellten Ausführungsbeispiel (siehe auch Fig. 3 und Fig. 5) weisen die Zahnräder 6, 7, damit diese definiert zueinander verdrehbar sind, eine Zapfen-Nuten-Paarung 15, 16 auf. Die Zapfen-Nuten-Paarung 15, 16 greift dabei mit Spiel ineinander.

Dabei ist vorgesehen, daß das Abtriebszahnrad 7 zwei Zapfen 15 aufweist, die in die dafür vorgesehenen Nuten 16 des Antriebszahnrades 6 eingreifen.

Wie aus Fig. 2 ersichtlich, weist das Abtriebszahnrad 7 eine Verlängerung 17 bzw. einen verlängerten Schacht auf, der mit einer Schrägführung 18 versehen ist. Die Schrägführung 18 dreht sich folglich mit dem Abtriebszahnrad 7. Die Schrägführung 18 ist in dem in Fig. 2 dargestellten Ausführungsbeispiel als Schrägnut 18 ausgebildet. In der Antriebswelle 13 ist eine Längsführung 19 angeordnet, die sich folglich mit der Antriebswelle 13 bzw. dem Antriebszahnrad 6 dreht. In dem in Fig. 2 dargestellten Ausführungsbeispiel ist die Längsführung als Längsnut 19 ausgebildet.

Sowohl die Schrägführung bzw. die Schrägnut 18 als auch die Längsführung bzw. die Längsnut 19 verstehen sich bezüglich ihrer Richtungsangabe im Hinblick auf die Antriebswelle 13. Somit erstreckt sich die Längsnut 19 in axialer Richtung der Antriebswelle 13 und die Schrägnut 18 mit einem definierten Steigungwinkel hierzu.

Die Schrägnut 18 ist mit einem definierten Steigungswinkel, im Ausführungsbeispiel 45° zu der Längsnut 19, in die Verlängerung 17 eingefräst.

Wie aus Fig. 2 erkennbar, überlagert die Schrägnut 18 die Längsnut 19 in der Antriebswelle 13. In die sich ergebende Öffnung 20 beider überlagerter Nuten 18, 19 ist ein Führungsstift 21 angeordnet bzw. eingeführt. Der Führungsstift 21 ist dabei in einem Ansteuerglied 22 zum Auslenken des Steuerventiles 12 verankert. Das Ansteuerglied ist in Fig. 2 als Hülse 22 ausgebildet und stellt die mechanische Verbindung zum Steuerventil 12 dar. Die Hülse 22 ist translatorisch zur Ansteuerung des Steuerventils 12 bewegbar.

Wie sich aus Fig. 2 leicht ersehen läßt, führt eine relative Bewegung der beiden Zahnräder 6, 7 zueinander zu einer relativen Verdrehung von Schrägnut 18 und Längsnut 19 zueinander. Durch die definierte Steigung der Schrägnut 18 und die axiale Ausrichtung der Längsnut 19 wird bei einer Drehbewegung eine Kraft auf den Führungsstift 21 ausgeübt. Diese Kraft führt dazu, daß der Führungsstift 21 abhängig von der Drehrichtung der Zahnräder in Richtung auf das Steuerventil 12 oder von diesen wegbewegt wird. Dies führt über die Hülse 22 zu einem Auslenken des Steuerventiles 12. Um ein rein translatorisches Auslenken des Steuerventiles 12 in axialer Richtung zu gewährleisten, wird das Steuerventil 12 mittels eines Lagers 23a von der Hülse 22 und damit von der Drehbewegung der Zahnräder 6, 7 entkoppelt.

Die Bewegung der Hülse 22 erfolgt axial zur Antriebswelle 13.

Gegenüber einem nicht näher dargestellten Getriebegehäuse erfolgt die Lagerung der in Fig. 2 beschriebenen Steuereinheit durch ein Festlager 23b auf dem Abtriebsrad 7 und einem Lager 23c an einem Ende der Antriebswelle 13.

In dem in Fig. 2 dargestellten Ausführungsbeispiel befinden sich die Zahnräder 6, 7 in einer Ausgangsstellung zueinander. In dieser Ausgangsstellung befindet sich das Steuerventil 12 in einer Neutralstellung. Unter der Ausgangsstellung der beiden Zahnräder 6, 7 ist dabei zu verstehen, daß der Elektromotor 5 kein Drehmoment erzeugt. Wirken keine Kräfte auf das Antriebszahnrad 6 und das Abtriebszahnrad 7, verharrt das Steuerventil 12 statisch in seiner Ausgangsstellung bzw. einer Mittellage.

Der Aufbau des Steuerventils 12 mit einem Ventilgehäuse 24 und einem Kolbenventil 25 ist, wie sich aus Fig. 2 erkennen läßt, prinzipiell von bekannter Bauweise, weshalb hierauf nicht näher eingegangen wird.

Fig. 3 zeigt die in entsprechenden Nuten 16 des Antriebszahnrades 6 angeordneten Zapfen 15 des Abtriebszahnrades 7. Dabei ist eine Variante einer Zentrier- und Rückführeinrichtung 26 dargestellt. Eine weitere Variante der Zentrier- und Rückführeinrichtung 26 ergibt sich aus Fig. 4. Die Zentrier- und Rückführeinrichtung 26 soll dafür sorgen, daß die Zahnräder 6, 7 und somit das Steuerventil 12 in die Ausgangslage bzw. die Neutralstellung zurückgeführt werden, wenn der Elektromotor 5 kein Moment erzeugt bzw. die Lenkbewegung beendet ist.

Die in Fig. 3 dargestellte Variante der Zentrier- und rückführeinrichtung 26 weist im Antriebszahnrad 6 verankerte Federn 27 auf. Die Federn 27 wirken dabei auf die Zapfen 15 des Abtriebszahnrades 7 ein. Die Federn 27 wirken dabei auf die Zapfen 15 eine radiale Kraft aus. Jedem Zapfen 15 sind zwei gegenüberliegende Federn 27 zugeordnet, die eine entgegengesetzte Kraftrichtung aufweisen. In dem Ausführungsbeispiel ist dabei vorgesehen, daß die Federn 27 eine lineare Kennlinie aufweisen, durch die die Auslenkung des Steuerventils 12 proportional zum Moment des Elektromotors 5 möglich ist.

Beim Erreichen des Kräftegleichgewichts der Federn 27 sind die Zapfen 15 in der Mitte der jeweiligen Nuten 16 angeordnet. Wie bereits erwähnt, ist das Steuerventil 12 in dieser Position nicht ausgelenkt. Die Federn 27 gewährleisten dabei, daß das Steuerventil 12 statisch in einer Neutralstellung verharrt, wenn keine Kräfte auf das Antriebszahnrad 6 und das Abtriebszahnrad 7 wirken.

Fig. 4 zeigt prinzipiell einen Aufbau der wesentlichen Teile der erfindungsgemäßen Lösung, der mit der in Fig. 2 bereits beschriebenen Lösung identisch ist. Der Unterschied liegt dabei lediglich in der Zentrier- und Rückführeinrichtung 26. Nachfolgend wird deshalb lediglich auf diesen Unterschied eingegangen. Die Zentrier- und Rückführeinrichtung 26 weist einen in der Ausgangsstellung der Zahnräder 6, 7 entspannten Drehstab 28 auf. Der Drehstab 28 ist dabei sowohl antriebseitig, d.h. auf der Seite des Antriebszahnrads 6 bzw. der Antriebswelle 13, als auch abtriebsseitig, d.h. auf der Seite des Abtriebszahnrades 7 bzw. dessen Verlängerung 17, verankert. Die in Fig. 2 dargestellte massive Antriebswelle 13 wird in der in Fig. 4 dargestellten Ausführungsform durch eine Antriebswelle 13 mit einem aufgebohrten Innenraum ersetzt. In den dadurch gebildeten Hohlraum 29 der Antriebswelle 13 wird der Drehstab 28 angeordnet bzw. eingesetzt. An einem Ende wird der Drehstab 28 mittels einem Stift 30 mit der Antriebswelle 13 verstiftet. Am anderen Ende wird der Drehstab 28 mittels einem weiteren Stift 30 mit der Verlängerung 17 des Abtriebszahnrades 7 ebenfalls fest verankert. Wirkt nun ein Moment auf das Antriebszahnrad 6, kommt es zu der bekannten Verdrehung der beiden Zahnräder 6, 7 zueinander. Der Drehstab 28 wird auf Torsion beansprucht. Mit zunehmendem Moment erhöht sich die Torsion am Drehstab 28. Das Steuerventil 12 wird proportional zum Moment des Elektromotors 5 ausgelenkt. Der Torsionsbereich ist auch bei der in Fig. 4 dargestellten Variante durch die Abmessungen der Zapfen-Nuten-Paarung 15, 16 definiert.

Ist der Auslenkvorgang beendet bzw. wenn kein Moment seitens des Elektromotors 5 anliegt, entspannt sich der Drehstab 28 und kehrt in seine Ausgangsstellung zurück. Dabei werden die Zapfen 15 des Abtriebszahnrades 7 wieder in der Mitte der jeweiligen Nuten 16 ausgerichtet. Somit befindet sich auch das Steuerventil 12 wieder in seiner Neutralstellung. Wirkt kein Moment auf das Antriebszahnrad 6 und das Abtriebszahnrad 7, verharrt das Steuerventil 12 statisch in dieser Position.

In der in Fig. 5 dargestellten Variante, die einer räumlichen Darstellung der Fig. 2 entspricht, wird die Zentrier- und Rückführeinrichtung 26 durch die Federn 27 gebildet. Übt der Elektromotor 5 ein Moment auf das Antriebszahnrad 6 aus, wirken die Fahrzeugräder 2 (in Fig. 5 nicht dargestellt) über das Abtriebszahnrad 7 diesem Moment entgegen. Das Kräftegleichgewicht der Federn 27 (siehe auch Fig. 3) wird verschoben und es kommt zu einer Auslenkung des Steuerventils 12.

Durch die lineare Auslenkung des Steuerventils 12 unterstützt die Hydraulikeinrichtung 11 bzw. der in Fig. 1 dargestellte Hydraulikzylinder 10 die Bewegung der Kugelspindel 9. Mit Zunahme des Moments des Elektromotors 5 erhöht sich somit auch die hydraulische Unterstützung der Lenkbewegung.

Fig. 6 zeigt eine zu Fig. 2 bzw. Fig. 4 alternative Ausgestaltung der Schrägführung 18 bzw. der Längsführung 19. Prinzipiell ist die in Fig. 6 dargestellte erfindungsgemäße Lösung identisch, so daß nachfolgend nur auf die sich aus den geänderten Ausführungen der Schrägführung 18 und der Längsführung 19 ergebenden Abweichungen eingegangen wird. Die Schrägführung ist als Kugelumlaufgewinde 18 mit einer definierten Steigung ausgebildet. Das Kugelumlaufgewinde 18 ist dabei zwischen dem Ansteuerglied, das wieder als Hülse 22 ausgebildet ist, und dem Abtriebszahnrad 7 angeordnet. Die Längsführung ist als lineare Führung 19 ausgebildet und weist Kugeln 31 auf, die in axial verlaufenden Nuten 32 zwischen der Antriebswelle 13 und der Hülse 22 geführt sind. Die in den Nuten 32 geführten Kugeln 31 verbinden somit die Hülse 22 mit der Antriebswelle 13 bzw. übertragen die Drehbewegung der Antriebswelle 13 auf die Hülse 22, wobei jedoch eine axiale Beweglichkeit der beiden Teile 13, 22 zueinander möglich ist.

Wie aus Fig. 6 ersichtlich, umschließt die Hülse 22 wenigstens einen Teil der Antriebswelle 13. Das Abtriebszahnrad 7 ist mit dem Kugelumlaufgewinde 18 ausgebildet und umschließt die Hülse 22 in einem Teilbereich des Außenumfanges. Die umlaufenden Kugeln des Kugelumlaufgewindes 18 werden mittels eines Kugelrücklaufs 33 in die Hülse 22 zurückgeführt.

Die Schrägführung bzw. das Kugelumlaufgewinde 18 der Fig. 6 arbeitet, vereinfacht dargestellt, nach einem Schraube-Mutter-Prinzip. Dabei stellt die Hülse 22 die Schraube dar, die sich innerhalb des Abtriebzahnrades 7, d.h. der Mutter, dreht. Die Axialbewegung der Hülse 22 wird somit durch das Kugelumlaufgewinde 18 und die Drehbewegung der Hülse 22 erzeugt. Die lineare Führung 19 ermöglicht dabei die axiale Beweglichkeit der Hülse 22 und überträgt die Drehbewegung von der Antriebswelle 13.

In leicht erkennbarer Weise ergibt sich die translatorische Bewegung der Hülse 22 dadurch, daß sich die Hülse 22 mit der Antriebswelle 13 dreht und axial zu dieser verschiebbar ist. Eine relative Bewegung des Antriebszahnrades 6 zu dem Abtriebszahnrad 7 führt dabei zwangsweise aufgrund der definierten Steigung des Kugelumlaufgewindes 18 und der axialen Führung durch die Nuten 32 und die Kugeln 31 zu einer translatorischen Bewegung der Hülse 22.

Diese Variante der erfindungsgemäßen Lösung ist zwar mit einem größeren Fertigungsaufwand verbunden, hat jedoch die Vorteile einer spielfreien Ansteuerung des Steuerventils 12, einer Geräuschreduzierung und einer minimalen Reibung.

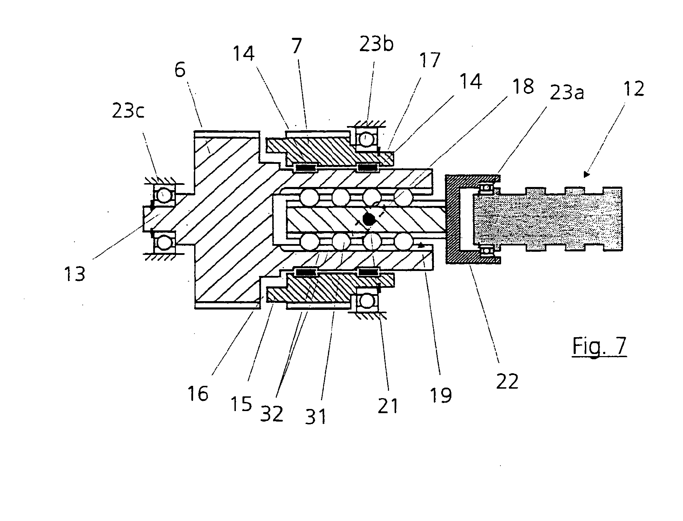

Fig. 7 zeigt eine Mischform aus der in Fig. 6 und Fig. 2 bereits dargestellten erfindungsgemäßen Lösungsvarianten. Dabei wird ein Kompromiß aus einer linearen Führung 19 durch Nuten 32 und Kugeln 31 sowie eine Verschiebung durch eine Schrägnut 18 gesucht.

Die Schrägführung ist somit in Fig. 7 als Schrägnut 18 in der Verlängerung 17 des Abtriebszahnrades 7 ausgebildet. Die Längsführung 19 ist als lineare bzw. axiale Führung 19 ausgebildet und weist Kugeln 31 auf, die in axial verlaufenden Nuten 32 zwischen der Antriebswelle 13 und dem wieder als Hülse 22 ausgebildeten Ansteuerglied geführt sind. Die axial verlaufenden Nuten 32 mit den Kugeln 31 übertragen die Drehbewegung der Antriebswelle 13 auf die Hülse 22. Ein fest mit der Hülse 22 bzw. dessen axialer Verlängerung verankerter Führungsstift 21 ist in der Schrägnut 18 geführt bzw. angeordnet. Bei einer relativen Verdrehung der Zahnräder 6, 7 zueinander wird analog zur Fig. 2 der Führungsstift 21 und somit auch die Hülse 22 translatorisch bzw. axial zur Antriebswelle 13 bewegt. Dies ist wiederum leicht vorstellbar, da sich die Hülse 22 bzw. deren axiale Verlängerung aufgrund der axial verlaufenden Nuten 32 und der Kugeln 31 mit der Antriebswelle 13 drehen muß. Eine relative Verschiebung des Antriebszahnrades 6 zu dem Abtriebszahnrad 7, dessen Verlängerung 17 die Schrägnut 18 aufweist, führt nun dazu, daß eine Kraft auf den Führungsstift 21 ausgeübt wird. Diese Kraft führt dazu, daß der Führungsstift 21 abhängig von der Drehrichtung der Zahnräder 6, 7 in Richtung auf das Steuerventil 12 oder entgegengesetzt dazu bewegt wird. Daraus resultiert die entsprechende Bewegung der Hülse 22 bzw. die translatorische Auslenkung des Steuerventils 12.

### Bezugszeichen

- 1: Lenkhandhabe
- 2: Fahrzeugräder
- 3: Winkelsensor
- 4: Steuergerät
- 5: Elektromotor
- 6: Antriebszahnrad
- 7: Abtriebszahnrad
- 8: Kugelumlaufmutter
- 9: Kugelspindel
- 10: Hydraulikzylinder
- 11: Hydraulikeinheit
- 12: Steuerventil
- 13: Antriebswelle
- 14: Lager
- 15: Zapfen
- 16: Nuten
- 17: Verlängerung des Abtriebszahnrades
- 18: Schrägführung, Schrägnut
- 19: Längsführung, Längsnut
- 20: Öffnung
- 21: Führungsstift
- 22: Ansteuerglied, Hülse
- 23a: Lager (Hülse-Ventil)
- 23b: Festlager (zum Getriebegehäuse)
- 23c: Lager (zum Getriebegehäuse)
- 24: Ventilgehäuse
- 25: Kolbenventil
- 26: Zentrier- und Rückführeinheit
- 27: Feder
- 28: Drehstab
- 29: Hohlraum
- 30: Stift
- 31: Kugeln
- 32: Nuten
- 33: Kugelrücklauf

## Patentansprüche

1. Hydrolenkung für Kraftfahrzeuge mit einer Lenkhandhabe, die ohne Zwangskopplung mit zu lenkenden Fahrzeugrädern betätigbar ist, wobei ein Winkelsensor die Lenkbewegung erfaßt und an ein Steuergerät übermittelt, welches einen Elektromotor ansteuert, der ein Moment auf eine Antriebswelle eines Lenkgetriebes zur Auslenkung der Fahrzeugräder ausübt, und wobei der Elektromotor zur hydraulischen Unterstützung ein Steuerventil einer Hydraulikeinheit ansteuert,
**dadurch gekennzeichnet, daß**
die Antriebswelle (13) mit einem starr verbundenen Antriebszahnrad (6) und einem entkoppelten Abtriebszahnrad (7) zur Übertragung des Moments auf die Fahrzeugräder (2) versehen ist, wobei die Zahnräder (6,7) definiert zueinander drehbar sind, und wobei ein translatorisch bewegbares Ansteuerglied (22) zum Auslenken des Steuerventils (12) sowohl durch eine sich mit dem Abtriebszahnrad (7) drehende Schrägführung (18) als auch durch eine sich mit der Antriebswelle (13) drehende Längsführung (19) derart geführt ist, daß eine relative Verdrehung der beiden Zahnräder (6,7) zueinander zu einer Verschiebung des Ansteuergliedes (22) in axialer Richtung der Antriebswelle (13) führt.

2. Hydrolenkung nach Anspruch 1,
**dadurch gekennzeichnet, daß**
die Zahnräder (6,7) mittels einer Zapfen-Nut-Paarung (15,16) mit Spiel ineinander greifen.

3. Hydrolenkung nach Anspruch 2,
**dadurch gekennzeichnet, daß**
das Abtriebszahnrad (7) zwei Zapfen (15) aufweist, die in entsprechende Nuten (16) des Antriebszahnrads (6) eingreifen.

4. Hydrolenkung nach Anspruch 1, 2 oder 3,
**dadurch gekennzeichnet, daß**
sich das Steuerventil (12) in Ausgangsstellung der beiden Zahnräder (6,7) zueinander in einer Neutralstellung befindet.

5. Hydrolenkung nach Anspruch 4,
**dadurch gekennzeichnet, daß**
eine Zentrier- und Rückführeinrichtung (26) vorgesehen ist, die die Zahnräder (6,7) nach Beendigung der Lenkbewegung in die Ausgangsstellung zurückführt.

6. Hydrolenkung nach Anspruch 5,
**dadurch gekennzeichnet, daß**
die Zentrier- und Rückführeinrichtung (26) im Antriebszahnrad (6) verankerte Federn (27) aufweist, die auf die Zapfen (15) des Abtriebszahnrades (7) derart einwirken, daß die Zapfen (15) bei einem Kräftegleichgewicht der Federn (27) in der Mitte der jeweiligen Nuten (16) angeordnet sind.

7. Hydrolenkung nach Anspruch 6,
**dadurch gekennzeichnet, daß**
jedem Zapfen (15) zwei gegenüberliegende Federn (27) zugeordnet sind, die eine entgegengesetzte Kraftrichtung und lineare Kennlinien aufweisen.

8. Hydrolenkung nach Anspruch 5,
**dadurch gekennzeichnet, daß**
die Zentrier- und Rückführeinrichtung (26) einen in der Ausgangslage der Zahnräder (6,7) entspannten Drehstab (28) aufweist, wobei der Drehstab (28) sowohl antriebsseitig als auch abtriebsseitig verankert ist.

9. Hydrolenkung nach Anspruch 8,
**dadurch gekennzeichnet, daß**
der Drehstab (28) in einem Hohlraum (29) der Antriebswelle (13) angeordnet ist, wobei ein Ende des Drehstabes mittels einem Stift (30) mit der Antriebswelle (13) und das andere Ende ebenfalls mittels einem Stift (30) mit einer Verlängerung (17) des Abtriebszahnrades (7) verankert ist.

10. Hydrolenkung nach einem der Ansprüche 1 bis 9,
**dadurch gekennzeichnet, daß**
die Schrägführung (18) als Schrägnut in der Verlängerung (17) des Abtriebszahnrades (7) und die Längsführung (19) als Längsnut in der Antriebswelle (13) ausgebildet sind, wobei sich die Schrägnut (18) und die Längsnut (19) überlagern und in der sich ergebenden Öffnung (20) ein mit dem Ansteuerglied (22) verbundener Führungsstift (21) angeordnet ist.

11. Hydrolenkung nach Anspruch 10,
**dadurch gekennzeichnet, daß**
eine relative Verdrehung der Zahnräder (6,7) zueinander zu einer Verdrehung von Schrägnut (18) zu Längsnut (19) derart führt, daß auf den Führungsstift (21) eine Kraft einwirkt, die den Führungsstift (21) und somit auch das Ansteuerglied (22) axial zur Antriebswelle (13) bewegt.

12. Hydrolenkung nach einem der Ansprüche 1 bis 9,
**dadurch gekennzeichnet, daß**
die Schrägführung (18) als mit einer Steigung versehenes Kugelumlaufgewinde ausgebildet ist, welches zwischen dem Ansteuerglied (22) und dem Abtriebszahnrad (7) bzw. dessen Verlängerung (17) angeordnet ist, und wobei die Längsführung (19) als lineare Führung ausgebildet ist und Kugeln (31) aufweist, die in axial verlaufenden Nuten (32) zwischen der Antriebswelle (13) und dem Ansteuerglied (22) geführt sind und die Drehbewegung der Antriebswelle (13) auf das Ansteuerglied (22) übertragen.

13. Hydrolenkung nach Anspruch 12,
**dadurch gekennzeichnet, daß**
das Abtriebszahnrad (7) mit dem Kugelumlaufgewinde (18) ausgebildet ist.

14. Hydrolenkung nach Anspruch 12 oder 13,
**dadurch gekennzeichnet, daß**
die Kugeln des Kugelumlaufgewindes (18) mittels eines Kugelrücklaufes (33) in der Hülse (22) zurückführbar sind.

15. Hydrolenkung nach einem der Ansprüche 1 bis 9,
**dadurch gekennzeichnet, daß**
die Schrägführung (18) als Schrägnut in der Verlängerung (17) des Abtriebszahnrads (7) ausgebildet ist und die Längsführung (19) als lineare Fürhung ausgebildet ist und Kugeln (31) aufweist, die in axial verlaufenden Nuten (32) zwischen der Antriebswelle (13) und dem Ansteuerglied (22) geführt sind und die Drehbewegung der Antriebswelle (13) auf das Ansteuerglied (22) übertragen, und wobei ein fest mit dem Ansteuerglied (22) verankerter Führungsstift (21) in der Schrägnut (18) derart geführt ist, daß sich der Führungsstift (21) und somit auch das Ansteuerglied (22) bei einer relativen Verdrehung der Zahnräder (6,7) zueinander axial zur Antriebswelle (13) bewegt.

16. Hydrolenkung nach einem der Ansprüche 1 bis 15,
**dadurch gekennzeichnet, daß**
das Ansteuerglied als Hülse (22) ausgebildet ist, wobei zur Entkopplung der Drehbewegung der Zahnräder (6,7) von dem Steuerventil (12) zwischen der Hülse (22) und dem Steuerventil (12) ein Lager (23a) angeordnet ist.

## Claims

1. Hydraulic steering system for motor vehicles, having a steering handle which can be actuated without positive coupling to vehicle wheels which are to be steered, an angular sensor detecting the steering movement and transmitting it to a control unit which actuates an electric motor which exerts a moment on a drive shaft of a steering gear for deflecting the vehicle wheels, and the electric motor actuating a control valve of a hydraulic unit for hydraulic assistance, **characterized in that** the drive shaft (13) is provided with a rigidly connected drive gearwheel (6) and a decoupled output gearwheel (7) for transmitting the moment to the vehicle wheels (2), it being possible for the gearwheels (6, 7) to rotate in a defined manner with respect to one another, and a translationally movable actuating element (22) for deflecting the control valve (12) being guided both by an oblique guide (18) which rotates with the output gearwheel (7) and by a longitudinal guide (19) which rotates with the drive shaft (13), in such a way that a relative rotation of the two gearwheels (6, 7) with respect to one another leads to a displacement of the actuating element (22) in the axial direction of the drive shaft (13).

2. Hydraulic steering system according to Claim 1, **characterized in that** the gearwheels (6, 7) engage in one another with play by means of a journal/groove pairing (15, 16).

3. Hydraulic steering system according to Claim 2, **characterized in that** the output gearwheel (7) has two journals (15) which engage into corresponding grooves (16) of the drive gearwheel (6).

4. Hydraulic steering system according to Claim 1, 2 or 3, **characterized in that** the control valve (12) is situated in a neutral position in the starting position of the two gearwheels (6, 7) with respect to one another.

5. Hydraulic steering system according to Claim 4, **characterized in that** a centring and return device (26) is provided which returns the gearwheels (6, 7) into the starting position after the end of the steering movement.

6. Hydraulic steering system according to Claim 5, **characterized in that** the centring and return device (26) has springs (27) which are anchored in the drive gearwheel (6) and act on the journals (15) of the output gearwheel (7) in such a way that the journals (15) are arranged in the centre of the respective grooves (16) in the event of a force equilibrium of the springs (27).

7. Hydraulic steering system according to Claim 6, **characterized in that** every journal (15) is assigned two springs (27) which lie opposite one another and have an opposite force direction and linear characteristic curves.

8. Hydraulic steering system according to Claim 5, **characterized in that** the centring and return device (26) has a torsion bar (28) which is relieved in the starting position of the gearwheels (6, 7), the torsion bar (28) being anchored both on the drive side and on the output side.

9. Hydraulic steering system according to Claim 8, **characterized in that** the torsion bar (28) is arranged in a cavity (29) of the drive shaft (13), one end of the torsion bar being anchored by means of a pin (30) to the drive shaft (13) and the other end being anchored likewise by means of a pin (30) to an extension (17) of the output gearwheel (7).

10. Hydraulic steering system according to one of Claims 1 to 9, **characterized in that** the oblique guide (18) is formed as an oblique groove in the extension (17) of the output gearwheel (7) and the longitudinal guide (19) is formed as a longitudinal groove in the drive shaft (13), the oblique groove (18) and the longitudinal groove (19) being superimposed and a guide pin (21) which is connected to the actuating element (22) being arranged in the resulting opening (20).

11. Hydraulic steering system according to Claim 10, **characterized in that** a relative rotation of the gearwheels (6, 7) with respect to one another leads to a rotation of the oblique groove (18) with respect to the longitudinal groove (19), in such a way that a force which moves the guide pin (21) and therefore also the actuating element (22) axially with respect to the drive shaft (13) acts on the guide pin (21).

12. Hydraulic steering system according to one of Claims 1 to 9, **characterized in that** the oblique guide (18) is configured as a ball and groove thread which is provided with a lead and is arranged between the actuating element (22) and the output gearwheel (7) or its extension (17), and the longitudinal guide (19) being configured as a linear guide and having balls (31) which are guided in axially extending grooves (32) between the drive shaft (13) and the actuating element (22) and transmit the rotational movement of the drive shaft (13) to the actuating element (22).

13. Hydraulic steering system according to Claim 12, **characterized in that** the output gearwheel (7) is formed with the ball and groove thread (18).

14. Hydraulic steering system according to Claim 12 or 13, **characterized in that** the balls of the ball and groove thread (18) can be returned by means of a ball return (33) in the sleeve (22).

15. Hydraulic steering system according to one of Claims 1 to 9, **characterized in that** the oblique guide (18) is formed as an oblique groove in the extension (17) of the output gearwheel (7) and the longitudinal guide (19) is formed as a linear guide and has balls (31) which are guided in axially extending grooves (32) between the drive shaft (13) and the actuating element (22) and transmit the rotational movement of the drive shaft (13) to the actuating element (22), and a guide pin (21) which is anchored fixedly to the actuating element (22) being guided in the oblique groove (18) in such a way that the guide pin (21) and therefore also the actuating element (22) move axially with respect to the drive shaft (13) in the event of a relative rotation of the gearwheels (6, 7) with respect to one another.

16. Hydraulic steering system according to one of Claims 1 to 15, **characterized in that** the actuating element is configured as a sleeve (22), a bearing (23a) being arranged between the sleeve (22) and the control valve (12) for decoupling the rotational movement of the gearwheels (6, 7) from the control valve (12).

## Revendications

1. Direction hydraulique pour véhicules automobiles, comprenant une prise de direction qui peut être actionnée sans accouplement forcé avec des roues du véhicule à diriger, un capteur d'angle détectant le mouvement de direction et le transmettant à un appareil de commande, qui commande un moteur électrique qui exerce un couple sur un arbre d'entraînement d'un mécanisme de direction pour dévier les roues du véhicule, et le moteur électrique pour l'assistance hydraulique commandant une soupape de commande d'une unité hydraulique,
**caractérisée en ce que**
l'arbre d'entraînement (13) est pourvu d'une roue dentée d'entraînement (6) connectée rigidement et d'une roue dentée de sortie (7) désaccouplée pour le transfert du couple aux roues du véhicule (2), les roues dentées (6, 7) pouvant tourner de manière définie l'une par rapport à l'autre, et un organe de commande (22) déplaçable en translation pour la déviation de la soupape de commande (12) étant guidé à la fois par une coulisse oblique (18) tournant avec la roue dentée de sortie (7) et par une coulisse longitudinale (19) tournant avec l'arbre d'entraînement (13), de telle sorte qu'une rotation relative des deux roues dentées (6, 7) l'une par rapport à l'autre conduise à un déplacement de l'organe de commande (22) dans la direction axiale de l'arbre d'entraînement (13).

2. Direction hydraulique selon la revendication 1,
**caractérisée en ce que**
les roues dentées (6, 7) viennent en prise l'une dans l'autre avec jeu au moyen d'une paire tourillon-rainure (15, 16).

3. Direction hydraulique selon la revendication 2,
**caractérisée en ce que**
la roue dentée de sortie (7) présente deux tourillons (15) qui viennent en prise dans des rainures correspondantes (16) de la roue dentée d'entraînement (6).

4. Direction hydraulique selon la revendication 1, 2 ou 3,
**caractérisée en ce que**
la soupape de commande (12) se trouve dans une position neutre dans la position de départ des deux roues dentées (6, 7) l'une par rapport à l'autre.

5. Direction hydraulique selon la revendication 4,
**caractérisée en ce que**
l'on prévoit un dispositif de centrage et de rappel (26) qui ramène les roues dentées (6, 7) dans la position de départ à la fin du mouvement de direction.

6. Direction hydraulique selon la revendication 5,
**caractérisée en ce que**
le dispositif de centrage et de rappel (26) présente des ressorts (27) ancrés dans la roue dentée d'entraînement (6), lesquels agissent sur les tourillons (15) de la roue dentée de sortie (7) de telle sorte que les tourillons (15) soient disposés au milieu des rainures correspondantes (16) lors d'un équilibre des forces des ressorts (27).

7. Direction hydraulique selon la revendication 6,
**caractérisée en ce que**
deux ressorts opposés (27) sont associés à chaque tourillon (15), et présentent une direction de force opposée et des caractéristiques linéaires.

8. Direction hydraulique selon la revendication 5,
**caractérisée en ce que**
le dispositif de centrage et de rappel (26) présente une barre rotative (28) détendue dans la position de départ des roues dentées (6, 7), la barre rotative (28) étant ancrée du côté de l'entraînement et aussi du côté de sortie.

9. Direction hydraulique selon la revendication 8,
**caractérisée en ce que**
la barre rotative (28) est disposée dans une cavité (29) de l'arbre d'entraînement (13), une extrémité de la barre rotative étant ancrée au moyen d'une goupille (30) avec l'arbre d'entraînement (13) et l'autre extrémité étant également ancrée au moyen d'une goupille (30) avec une prolongation (17) de la roue dentée de sortie (7).

10. Direction hydraulique selon l'une quelconque des revendications 1 à 9,
**caractérisée en ce que**
la coulisse oblique (18) est réalisée sous forme de rainure oblique dans la prolongation (17) de la roue dentée de sortie (7) et la coulisse longitudinale (19) est réalisée sous forme de rainure longitudinale dans l'arbre d'entraînement (13), la rainure oblique (18) et la rainure longitudinale (19) se superposant et une goupille de guidage (21) connectée à l'organe de commande (22) étant disposée dans l'ouverture en résultant (20).

11. Direction hydraulique selon la revendication 10,
**caractérisée en ce que** une rotation relative des roues dentées (6, 7) l'une par rapport à l'autre conduit à une rotation de la rainure oblique (18) par rapport à la rainure longitudinale (19) de telle sorte qu'une force agisse sur la goupille de guidage (21), laquelle déplace la goupille de guidage (21) et donc également l'organe de commande (22) axialement par rapport à l'arbre d'entraînement (13).

12. Direction hydraulique selon l'une quelconque des revendications 1 à 9,
**caractérisée en ce que** la coulisse oblique (18) est réalisée en tant que filetage périphérique sphérique pourvu d'un pas, qui est disposé entre l'organe de commande (22) et la roue dentée de sortie (7) ou sa prolongation (17), et la coulisse longitudinale (19) étant réalisée sous forme de coulisse linéaire et présentant des billes (31) qui sont guidées dans des rainures (32) s'étendant axialement entre l'arbre d'entraînement (13) et l'organe de commande (22) et transmettant le mouvement de rotation de l'arbre d'entraînement (13) à l'organe de commande (22).

13. Direction hydraulique selon la revendication 12,
**caractérisée en ce que**
la roue dentée de sortie (7) est réalisée avec le filetage périphérique sphérique (18).

14. Direction hydraulique selon la revendication 12 ou 13,
**caractérisée en ce que**
les billes du filetage périphérique sphérique (18) peuvent être ramenées dans la douille (22) au moyen d'un retour de bille (33).

15. Direction hydraulique selon l'une quelconque des revendications 1 à 9,
**caractérisée en ce que** la coulisse oblique (18) est réalisée sous forme de rainure oblique dans la prolongation (17) de la roue dentée de sortie (7) et la coulisse longitudinale (19) est réalisée sous forme de coulisse linéaire et présente des billes (31), qui sont guidées dans des rainures (32) s'étendant axialement entre l'arbre d'entraînement (13) et l'organe de commande (22) et qui transmettent le mouvement de rotation de l'arbre d'entraînement (13) sur l'organe de commande (22), et une goupille de guidage (21) ancrée fixement avec l'organe de commande (22) étant guidée dans la rainure oblique (18) de telle sorte que la goupille de guidage (21) et donc également l'organe de commande (22) se déplace axialement par rapport à l'arbre d'entraînement (13) dans le cas d'une rotation relative des roues dentées (6, 7) l'une par rapport à l'autre.

16. Direction hydraulique selon l'une quelconque des revendications 1 à 15,
**caractérisée en ce que**
l'organe de commande est réalisé sous forme de douille (22), un palier (23a) étant disposé entre la douille (22) et la soupape de commande (12) pour désaccoupler le mouvement de rotation des roues dentées (6, 7) de la soupape de commande (12).
